# EUROPÄISCHE PATENTANMELDUNG

(11) **EP 2 211 126 A1**
(43) Veröffentlichungstag der Anmeldung: **28.07.2010**
(21) Anmeldenummer: 10159027.1
(22) Anmeldetag: 08.12.2006
(51) Int. Cl.: F25B 35/04

(54) **Sorptionswärmeübertragerwand und Sorptionswärmeübertrager**

(30) Priorität: 19.12.2005 DE 102005060623; 03.05.2006 DE 102006020794
(62) Teilanmeldung aus: 06829464.4
(71) Anmelder: Behr GmbH & Co. KG, 70469 Stuttgart (DE)
(72) Erfinder: Burk, Roland, 70469 Stuttgart (DE); Zwittig, Eberhard, 73269 Hochdorf (DE); Watzlawski, Markus, 73760 Ostfildern (DE)

(57) **Zusammenfassung**

Die Erfindung betrifft eine Sorptionswärmeübertragerwand mit einer von einem Wärme abgebendem oder aufnehmendem Fluid beaufschlagten Fluidseite (2), die durch eine Fluidwand (4) begrenzt ist, und einer Sorptionsseite (5), die ein Soprtionsbett (6) mit einem Sorptionsmittel (7) aufweist, das unter Aufnahme beziehungsweise Abgabe von Wärme ein Sorptiv anlagert.

Um eine mechanisch stabile Sorptionswand zu schaffen, die gute Wärme- und Stofftransporteigenschaften aufweist, umfasst das Sorptionsbett (6) eine gut wärmeleitende Tragstruktur (10,21) für das Sorptionsmittel (7), die wärmeleitend mit der Fluidwand (4) verbunden ist und ein hierarchisches Hohlraumsystem.

## Beschreibung

Die Erfindung betrifft eine Sorptionswärmeübertragerwand mit einer von einem Wärme abgebendem oder aufnehmendem Fluid beaufschlagten Fluidseite, die durch eine Fluidwand begrenzt ist, und einer Sorptionsseite, die ein Sorptionsbett mit einem Sorptionsmittel aufweist, das unter Aufnahme beziehungsweise Abgabe von Wärme ein Sorptiv abgibt bzw. anlagert.

Aus der europäischen Patentanmeldung EP 1 175 583 B1 ist ein Absorber-Wärmetauscher bekannt, bei dem polares Gas wiederholt an einer Komplexverbindung absorbiert und desorbiert wird. Der bekannte Wärmetauscher weist zwischen mindestens einem Teil der Wärmetauscheroberflächen einen Raum auf, der eine Sorbens/Substrat-Zusammensetzung enthält, die ein faseriges Substratmaterial umfasst, das gegenüber dem polaren Gas oder Wasserstoff inert ist. Das faserige Substratmaterial umfasst gewebte oder nicht gewebte Stränge oder Fasern oder Kombinationen gewebter und nicht gewebter Stränge oder Fasern. Das Absorbens ist in das faserige Substratmaterial eingebettet.

Aufgabe der Erfindung ist es, eine mechanisch stabile Sorptionswärmeübertragerwand gemäß dem Oberbegriff des Anspruchs 1 zu schaffen, die gute Wärme- und Stofftransporteigenschaften aufweist.

Die Aufgabe ist bei einer Sorptionswärmeübertragerwand mit einer von einem Wärme abgebendem oder aufnehmendem Fluid beaufschlagten Fluidseite, die durch eine Fluidwand begrenzt ist, und einer Sorptionsseite, die ein Sorptionsbett mit einem Sorptionsmittel aufweist, das unter Aufnahme beziehungsweise Abgabe von Wärme ein Sorptiv abgibt bzw. anlagert, dadurch gelöst, dass das Sorptionsbett eine gut wärmeleitende Tragstruktur für das Sorptionsmittel umfasst, die wärmeleitend mit der Fluidwand verbunden ist. Die vorliegende Erfindung betrifft vorzugsweise die Adsorption, also die reversible Anlagerung von Gasen oder gelösten Stoffen an der Oberfläche fester Körper. Die Sorptionswärmeübertragerwand ist vorzugsweise Teil eines Sorptionswärmeübertragers, der auch als Sorptionsreaktor bezeichnet wird und zu einem geschlossenen Sorptionsrohr weitergebildet sein kann. Grundlage eines Sorptionswärmeübertragers ist die reversible Bindung oder Anlagerung eines gasförmigen Arbeitsmittels (Sorptivs) an einen Festkörper (Sorbens) unter Abgabe beziehungsweise Aufnahme von Wärme. Zur verlustarmen Zu- beziehungsweise Abfuhr der Stoffströme bei der Adsorption beziehungsweise Desorption des zugeordneten Arbeitsmittels in den Feststoff hinein beziehungsweise aus dem Feststoff heraus sollte der Feststoff dem Gasraum eine möglichst große Oberfläche mit kurzen Diffusionswegen anbieten. Des Weiteren müssen die dabei entstehenden Wärmeleistungen möglichst gut aus dem Feststoff ab- beziehungsweise zugeführt werden können. Durch die Verbindung der wärmeleitenden Tragstruktur mit der Fluidwand kann einerseits eine hohe mechanische Festigkeit erreicht werden, und andererseits eine große makroskopische Wärmekontaktfläche zum üblicherweise schlecht wärmeleitenden Sorbens bereitgestellt werden. Die erfindungsgemäße Struktur liefert einen guten Kompromiss zwischen Wärmetransport, Stofftransport, Adsorptionskapazität und Verhältnis von Aktivzu Passivmassen. Dabei wird auch bei den im Betrieb auftretenden thermischen Spannungen und Vibrationen, insbesondere bei mobilen Anwendungen, eine ausreichende mechanische Dauerfestigkeit gewährleistet. Darüber hinaus ist die erfindungsgemäße wärmeleitende Tragstruktur kostengünstig und weitgehend automatisiert herstellbar.

Ein bevorzugtes Ausführungsbeispiel der Sorptionswärmeübertragerwand ist **dadurch gekennzeichnet, dass** die wärmeleitende Tragstruktur eine wärmeleitende Makro-Tragstruktur umfasst. Die Makro-Tragstruktur ist vorzugsweise so ausgebildet und angeordnet, dass der gesamte Raum des Sorptionsbetts durchsetzt wird. Diese Makro-Tragstruktur bildet ein Grobnetz zur Wärmeleitung von der Fluidwand in die Adsorberstruktur hinein. Damit können große Adsorbensmassen thermisch an die Fluidwand angebunden werden.

Ein weiteres bevorzugtes Ausführungsbeispiel der Sorptionswärmeübertragerwand ist **dadurch gekennzeichnet, dass** die Makro-Tragstruktur ein Streckgitter, ein Drahtgewebe und/oder eine gelochte oder ungelochte Metallfolie umfasst. Wesentlich ist, dass die Makro-Tragstruktur eine sehr gut wärmeleitende metallische Skelettstruktur aufweist.

Ein weiteres bevorzugtes Ausführungsbeispiel der Sorptionswärmeübertragerwand ist **dadurch gekennzeichnet, dass** die Makro-Tragstruktur ein Streckgitter mit rautenförmigen oder sechseckigen Maschen umfasst. Besonders bevorzugt wird ein flachgewalztes Feinst-Streckgitter eingesetzt.

Ein weiteres bevorzugtes Ausführungsbeispiel der Sorptionswärmeübertragerwand ist **dadurch gekennzeichnet, dass** die Maschen eine lange Achse aufweisen, die senkrecht zu der Fluidwand verläuft. Dadurch wird bei einfacher Herstellbarkeit der Wärmeleitweg kurz gehalten.

Ein weiteres bevorzugtes Ausführungsbeispiel der Sorptionswärmeübertragerwand ist **dadurch gekennzeichnet, dass** die Maschen eine Stegbreite von weniger als 1 mm, insbesondere von weniger als 0,5 mm, aufweisen. Gemäß einem Aspekt der Erfindung wird die Stegbreite möglichst klein gewählt.

Ein weiteres bevorzugtes Ausführungsbeispiel der Sorptionswärmeübertragerwand ist **dadurch gekennzeichnet, dass** das Streckgitter aus einem Bandmaterial gebildet ist, das eine Dicke von weniger als 0,5 mm, bevorzugt von weniger als 0,2 mm, besonders bevorzugt von weniger als 0,1 mm, aufweist. Ziel der Erfindung ist es, eine möglichst geringe Banddicke zu verwenden, um die Passivmassen bei ausreichender Wärmeleitung und mechanischer Armierungswirkung so klein wie möglich zu halten.

Ein weiteres bevorzugtes Ausführungsbeispiel der Sorptionswärmeübertragerwand ist **dadurch gekennzeichnet, dass** das Bandmaterial mindestens eine Kupfer- und/oder Aluminiumlegierung enthält. Diese Materialien liefern den Vorteil, dass sie gut wärmeleitend sind.

Ein weiteres bevorzugtes Ausführungsbeispiel ist **dadurch gekennzeichnet, dass** die Sorptionswärmeübertragerwand aus einer plissierten Sandwichstruktur gebildet wird, die im Wesentlichen aus zwei wärmeleitenden Folien und dazwischen angeordneter Adsorberstruktur besteht. Die zwischenliegende Adsorberstruktur kann optional Bereiche aufweisen, die aufgrund einer durchlässigeren Struktur einen axialen Dampftransport begünstigen. Die gut wärmeleitenden Deckfolien können dabei auch Durchbrüche für einen zusätzlichen Dampftransport aufweisen.

Ein weiteres bevorzugtes Ausführungsbeispiel ist **dadurch gekennzeichnet, dass** die Adsorberstruktur aus einer beidseitig mit einer Sorbensschicht versehenen metallischen flächigen Trägerstruktur gebildet ist, die zu einer plissierten Struktur umgeformt ist und wenigstes einseitig mit der Fluidwand wärmeleitend verbundnen ist. In einer besonders vorteilhaften Weiterbildung dieser Ausführungsform ist die plissierte Struktur auch wärmeleidend mit einer gegenüberliegenden Fluidwand eines Sorptionsreaktors oder Sorptionsrohres verbunden. Bevorzugt wird dazu ein Löt-, Schweiß- oder Klebeprozess verwendet. Zur Optimierung des Wärmekontaktes mit den Fluidwänden wird bevorzugt die Sorbensschicht im Bereich der Kontaktfläche von der metallischen Trägerstruktur entfernt, sodass diese in einen direkten metallischen und damit wärmeleitenden Kontakt zu den Fluidwänden kommt, was auch Voraussetzung für einen nachfolgenden Löt- oder Schweißprozess ist. In einer Weiterbildung dieser Ausführungsform besitzen die beidseitig an der Metallfolie anliegenden Sorbensschichten quer zur Walz- bzw. Fertigungsrichtung verlaufende Nuten oder Rillen, die in plissierter Form Dampfkanäle ausbilden, die den Stofftransport durch Diffusion zu den sorptionsaktiven Partikeln verkürzen.

Ein weiteres bevorzugtes Ausführungsbeispiel der Sorptionswärmeübertragerwand ist **dadurch gekennzeichnet, dass** die wärmeleitende Tragstruktur eine wärmeleitende Meso-Struktur umfasst. Diese Meso-Struktur bildet eine zweite Ebene einer wärmeleitenden Struktur, die ausgehend von einer Makrostruktur den Wärmestrom feiner verteilt in die direkte Nähe der Adsorbenspartikel führt. Analog zur fraktalen Struktur des Blutgefäßsystems eines Organismus werden durch diese feinere Struktur die Wärmeleitwege nochmals deutlich verkürzt und damit die thermische Anbindung jedes Sorbens-Partikels an die Fluidwand verbessert. Die wärmeleitende Meso-Struktur ist herstellungstechnisch Teil der Sorptionsmittelstruktur und wird zusammen mit dieser in die Gesamtstruktur eingebracht.

Ein weiteres bevorzugtes Ausführungsbeispiel der Sorptionswärmeübertragerwand ist **dadurch gekennzeichnet, dass** die wärmeleitende Meso-Struktur Kohlenstoff enthält. Der Einsatz von Kohlenstoff-basierten Adsorbienten liefert den Vorteil, dass die Meso-Wärmeleitstruktur bei geeigneter nicht zu großen Aktivierung gleichzeitig die sorptionsaktiven Strukturen bilden, zum Beispiel durch Verwendung von bevorzugt einzusetzenden teilaktivierten Kohlefasern (AKF), AKF-Filzen oder AKF-Geweben.

Ein weiteres bevorzugtes Ausführungsbeispiel der Sorptionswärmeübertragerwand ist **dadurch gekennzeichnet, dass** konventionell granulierte Aktivkohle zusammen mit Kohlenstoffpartikel, Kohlenstoffplättchen und/oder Kohlenstoff-Fasern, mit einem Binder zu einem zusammenhängenden, die Makrostruktur durchdringenden Adsorberblock verbunden wird. Die Mesostruktur wird dabei durch die auf gute Wärmeleitung ausgelegten Kohlenstoffpartikel gebildet. In einer optionalen Ausgestaltung der Ausführungsform können die Kohlenstoffpartikel in Form sogenannter "multiwalled Carbon Nanotubes" den sorptionsaktiven Partikeln beigemischt sein.

Ein weiteres bevorzugtes Ausführungsbeispiel der Sorptionswärmeübertragerwand ist **dadurch gekennzeichnet, dass** die wärmeleitende Meso-Struktur durch so genannte Grafit-Flakes gebildet wird. Diese führen also die grob verteilte Wärme in den Direktkontakt zu den Adsorberpartikeln.

Ein weiteres bevorzugtes Ausführungsbeispiel der Sorptionswärmeübertragerwand ist **dadurch gekennzeichnet, dass** die wärmeleitende Meso-Tragstruktur aktivierte Kohlefasern (AKF) enthält. Die aktivierten Kohlefasern liegen vorzugsweise in Form von Filzen oder Geweben vor.

Ein weiteres bevorzugtes Ausführungsbeispiel der Sorptionswärmeübertragerwand ist **dadurch gekennzeichnet, dass** die wärmeleitende Meso-Tragstruktur durch zugemischte gut wärmeleitende dünne Metallfasern gebildet wird die mit granulierter Aktivkohle vermischt mit einem Binder zu einem zusammenhängenden, die Makrostruktur durchdringenden Adsorberblock verbunden ist.

Ein weiteres bevorzugtes Ausführungsbeispiel der Sorptionswärmeübertragerwand ist **dadurch gekennzeichnet, dass** das Sorptionsbett eine Sorptionsmittelstruktur oder Kanalstruktur aufweist. Die Kanalstruktur dient dem Stofftransport und ist vorzugsweise analog zum Bronchialsystem einer Lunge, fraktal gestaltet. Durch die fraktale Gestaltung des Stofftransportweges der Arbeitsstoff-Moleküle zu den sorptionsaktiven Zentren des Adsorptionsbetts wird der Stofftransport optimiert. In Kombination mit einem der beschriebenen ebenfalls fraktal angenäherten Wärmetransportsysteme wird die Gesamtkinetik des damit gebildeten Sorptionswärmeübertragers optimiert. Damit durchdringen sich zwei unabhängige fraktale bzw. fraktal-angenäherte Transportsysteme analog zum Beispiel der Lunge, bei der sich ebenfalls zwei unabhängige fraktale Transportsysteme sich gegenseitig durchdringen.

In einem dazu bevorzugten Ausführungsbeispiel der Sorptionswärmeübertragerwand durchzieht die Sorptionsmittelstruktur ein Netz von Strömungskanälen. Durch die Strömungskanäle werden der Transport und die Verteilung von Sorptionsmittel optimiert.

Ein weiteres bevorzugtes Ausführungsbeispiel der Sorptionswärmeübertragerwand ist **dadurch gekennzeichnet, dass** das Strömungskanalnetz größere Strömungskanäle umfasst, von denen kleinere Strömungskanäle ausgehen. Vorzugsweise wird ausgehend von einem Netz großer Strömungskanäle auf ein Netz feinerer und schließlich feinster Strömungskanäle verzweigt. Damit wird bei minimiertem Leervolumen der Druckverlust von ein- und ausströmendem Sorbens minimiert.

Die Erfindung betrifft auch einen Sorptionswärmeübertrager mit mindestens einer vorab beschriebenen Sorptionswärmeübertragerwand.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
- Figur 1: die Ansicht eines Schnitts durch eine Sorptionswärmeübertragerwand gemäß einem ersten Ausführungsbeispiel;
- Figur 2: eine perspektivische Darstellung einer wärmeleitenden Tragstruktur;
- Figur 3: ein Adsorptionsrohr mit einer erfindungsgemäßen Wärmeübertragerwand im Längsschnitt;
- Figur 4: das Adsorptionsrohr aus Figur 3 in einem weiteren Längsschnitt;
- Figur 5: einen vergrößerten Ausschnitt V aus Figur 4;
- Figur 6: die Ansicht eines Schnitts entlang der Linie VI-VI in Figur 3;
- Figur 7: die Ansicht eines Schnitts entlang der Linie VII-VII in Figur 4;
- Figur 8: eine vergrößerte Darstellung der Figur 7;
- Figur 9: die Ansicht eines Schnitts durch eine Wärmeübertragerwand nach einem weiteren Ausführungsbeispiel;
- Figur 10: die Ansicht eines weiteren Schnitts durch die Wärmeübertragerwand aus Figur 9;
- Figur 11: eine ähnliche Darstellung wie in Figur 9 gemäß einem weiteren Ausführungsbeispiel;
- Figur 12: die Ansicht eines Schnitts durch ein Streckgitter, das mit einer Fluidwand verbunden ist, im Schnitt;
- Figur 13: eine schematische Darstellung eines gewickelten Sorptionsbetts;
- Figur 14: eine perspektivische Darstellung einer Spannvorrichtung für ein Sorptionsbett;
- Figur 15: eine Sandwichstruktur gebildet aus Wärmeleitfolien mit zwischengelagertem Adsorbens und Bereichen erhöhter Dampfdurchlässigkeit zur Bildung eines Sorptionsbetts;
- Figur 16: eine plissierte Sandwichstruktur zur Bildung einer alternativen Sorptionswärmeübertragerwand;
- Figur 17: einen Schnitt durch ein Sorptionsrohr mit einer gepressten, plissierten Sandwichstruktur;
- Figur 18: eine 5-schichtige Sandwichstruktur, die durch eine zusätzliche poröse Zwischenschicht zur Erhöhung der axialen Dampfdurchlässigkeit und durch Durchbrüche in den wärmeleitenden Deckfolien gekennzeichnet ist;
- Figur 19: eine schematische Darstellung über Aufbau und einer bevorzugten Herstellungsmethode eines laminierten Bandes zur Herstellung einer Adsorberstruktur;
- Figuren 20 und 21: Seitenansichten einer aus dem laminierten Band durch Plissieren und Abrakeln hergestellten Adsorberstruktur und
- Figuren 22 und 23: geschnittene Teilansichten eines Sorptionsrohres mit bevorzugten Adsorberstrukturen.

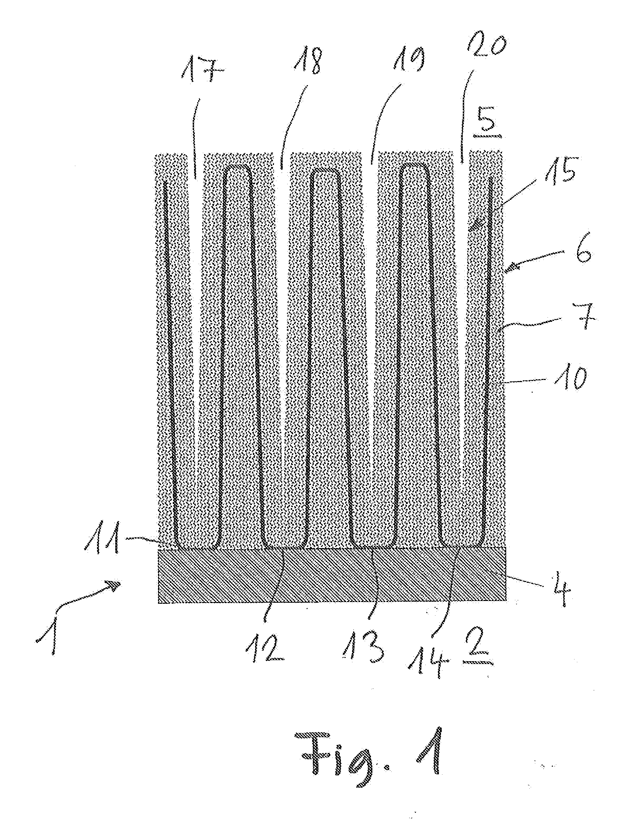

In Figur 1 ist eine Wärmeübertragerwand 1, die auch als Wärmeübertragungswand bezeichnet wird, im Schnitt dargestellt. Die Wärmeübertragungswand 1 ist Teil eines Adsorptionsreaktors mit einer Fluidseite 2, die durch eine Fluidwand 4 begrenzt ist. An der Fluidwand 4 strömt auf der Fluidseite 2 ein Fluid, wie zum Beispiel Wasser oder Luft, vorbei, das Wärme an die Fluidwand 4 abgibt. Die Fluidwand 4 ist vorzugsweise aus Metallblech gebildet. Bei dem Metallblech handelt es sich zum Beispiel um Aluminiumblech.

Die der Fluidseite 2 abgewandte Seite 5 der Wärmeübertragerwand 1 wird als Sorptionsseite bezeichnet. Auf der Sorptionsseite 5 der Wärmeübertragerwand 1 ist ein Sorptionsbett 6 ausgebildet. Das Sorptionsbett 6 enthält ein Sorptionsmittel 7, das an einer wärmeleitenden Tragstruktur 10 angebracht ist. Die wärmeleitende Tragstruktur 10 weist, im Schnitt betrachtet, eine im Wesentlichen zinnenförmige Struktur auf. Die Tragstruktur 10 ist an mehreren Verbindungstellen 11, 12, 13, 14 stoffschlüssig mit der Fluidwand 4 verbunden. An den Verbindungsstellen 11 bis 14 ist die Tragstruktur 10 zum Beispiel mit der Fluidwand 4 verlötet, verschweißt oder verklebt.

Die wärmeleitende Tragstruktur 10 wird auch Makro-Wärmeleitstruktur bezeichnet und umfasst zum Beispiel ein Streckmetallgitter, ein Drahtgewebe, Lochblech, Blech, und ist vorzugsweise aus einer Kupfer- oder Aluminiumlegierung gebildet.

Das Sorptionsmittel 7 ist mit einer Sorptionsmittelstruktur 15 versehen, die mehrere Strömungskanäle 17 bis 20 umfasst. Die Strömungskanäle 17 bis 20 haben die Gestalt von Sacklöchern, die senkrecht zu der Fluidwand 4 hin angeordnet sind und spitz zulaufen. Die Sorptionsmittelstruktur 15 wird auch als Adorberstruktur bezeichnet und umfasst zum Beispiel Kohlefaser-Filz, Kohlefaser-Gewebe oder eine gebundene Aktivkohle-Schüttung.

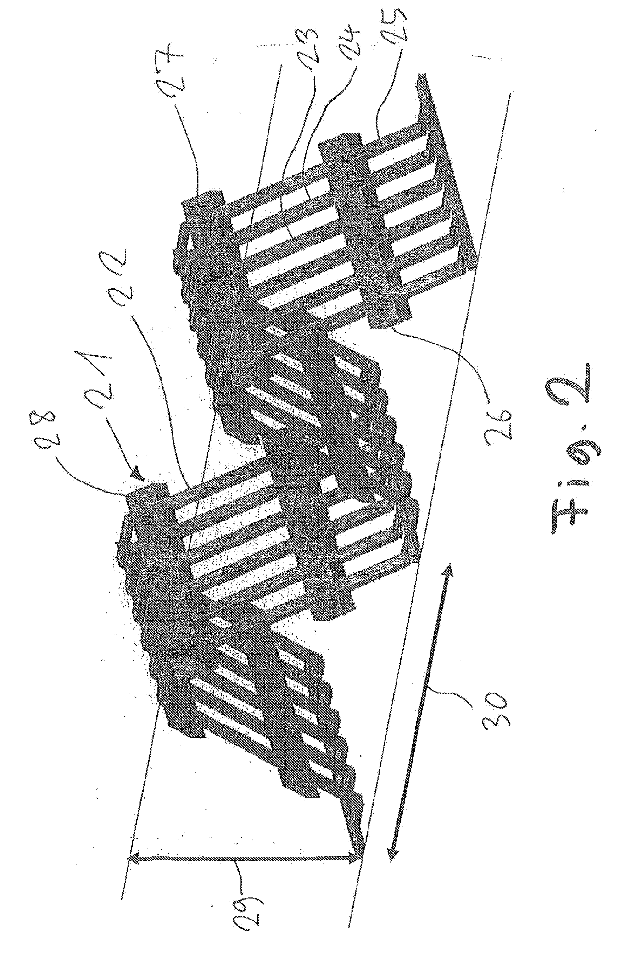

In Figur 2 ist eine wärmeleitende Tragstruktur 21 perspektivisch dargestellt. Die wärmeleitende Tragstruktur 21 wird von einem zick-zack-förmigen Metallgitter 22 gebildet, das eine Vielzahl von Längsstegen 23 bis 25 aufweist, die durch Querstege 26 bis 28 miteinander verbunden sind. Das Gitter 22 weist eine Plissierhöhe 29 und eine Plissierdichte 30 auf. Die wärmeleitende Tragstruktur 21 ist aus einer gut wärmeleitenden Legierung, vorzugsweise einer Kupfer- oder Aluminiumlegierung, gebildet und stellt eine wärmeleitende Armierungsstruktur für ein in einem Folgeprozess aufzubringendes Adsorptionsbett dar. Das Adsorptionsbett (nicht dargestellt) wird in Form einer hochviskosen beziehungsweise pastösen Masse oder einer Schüttung so in die primäre Armierungsstruktur eingebracht, dass die Hohlräume zwischen den Metallstegen 23 bis 28 nahezu vollkommen ausgefüllt werden und diese von der Adsorber-Verbundmasse umschlossen werden. Diese Verbundmasse oder Schüttung wird dann zu einem Festkörper ausgehärtet beziehungsweise gebunden.

Die Adsorber-Verbundmasse umfasst vorzugsweise Adsorberpartikel (zum Beispiel Aktivkohle, Zeolith, Silicagel, Metallhydrid) ein Bindemittel und optional einen guten wärmeleitenden Füllstoff, wie Kohlefasern, Grafitpartikel (Flakes), Metallfasern oder dergleichen. Optional und bevorzugt weist die Adsorber-Verbundmasse im Sinne eines fraktalen Modells eine mesoporöse Struktur auf, die den Stofftransport in tiefere Schichten der Struktur erleichtert, indem die Masse oder Schüttung noch Gashohlräume zwischen den Partikeln enthält. Weiterhin kann die Struktur noch zusätzliche Makrostrukturierungen, wie Schlitze, Spalte oder Sacklöcher aufweisen, die noch vor dem Aushärten der Gesamtstruktur durch Verdrängungs- oder Formgebungsmaßnahmen angebracht werden. Auf diese Weise wird ein hierarchisches (fraktales) Porensystem erzeugt, das von großen Querschnitten (Längskanälen, Sacklöchern, Schlitzen) auf immer kleinere Querschnitte (Zwischenräume zwischen Sorptionspartikeln) bis hin zu den innerpartikulären makro- und schließlich zu den sorptionsaktiven Meso- und Mikroporen verzweigt.

Die geometrische Dimensionierung der einzelnen Strukturen richtet sich dabei zum einen nach der Wahl des Stoffpaares, insbesondere den Stoffdaten des eingesetzten Arbeitsmittels (Dampfdruck, Dichte, Viskosität, Diffusionskoeffizienten) und zum anderen nach den Wärmeleiteigenschaften der verwendeten Strukturen. Nach Auswahl des Arbeitsstoffpaares können für die eingesetzten Strukturen auf Makro-, Meso- und Mikroebene mittels eines detaillierten Ersatzmodells für den Wärme- und Stofftransport die optimale geometrische Parameterkombination für die Gesamtstruktur ermittelt werden.

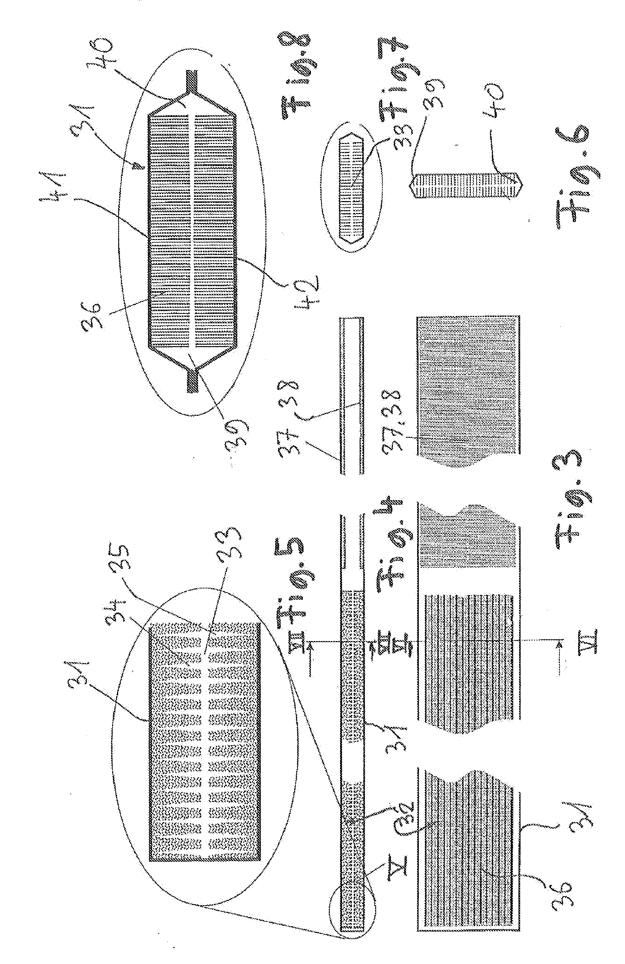

In den Figuren 3 bis 8 ist ein aus Halbschalen aufgebautes, allseitig hermetisch verschlossenes Adsorptionsrohr 31 in verschiedenen Ansichten dargestellt. Das Adsorptionsrohr 31 umfasst ein Adsorptionsbett 32 mit einer Adsorberstruktur. Bei der Adsorberstruktur handelt es sich zum Beispiel um eine gebundene Schüttung aus granulierter Aktivkohle. Die Adsorberstruktur umfasst, wie in Figur 5 gezeigt ist, einen Hauptströmungskanal 33, von dem mehrere Nebenströmungskanäle 34, 35 abzweigen. Die Nebenströmungskanäle 34, 35 sind senkrecht zu dem Hauptströmungskanal 33 angeordnet. Nach außen hin laufen die Nebenströmungskanäle 34, 35 spitz zu.

Die Adsorberstruktur ist auf eine Tragstruktur 36 aufgebracht. Das Sorptionsrohr 31 umfasst des Weiteren Kapillarstrukturen 37, 38, die zur Aufnahme von kondensierter Flüssigkeit dienen. Beim Aufheizen wird aus dem Sorptionsbett 32 Gas ausgetrieben, das an beziehungsweise in den Kapillarstrukturen 37, 38 kondensiert. In der vergrößerten Darstellung der Figur 8 sieht man, dass das Sorptionsrohr 31 aus zwei Halbschalen 41, 42 gebildet ist, die an den Verbindungsstellen stoffschlüssig miteinander verbunden sind. In der Nähe der Verbindungsstellen weisen die Halbschalen 41, 42 weitere Hauptströmungskanäle 39, 40 mit einem dreieckigen Querschnitt auf.

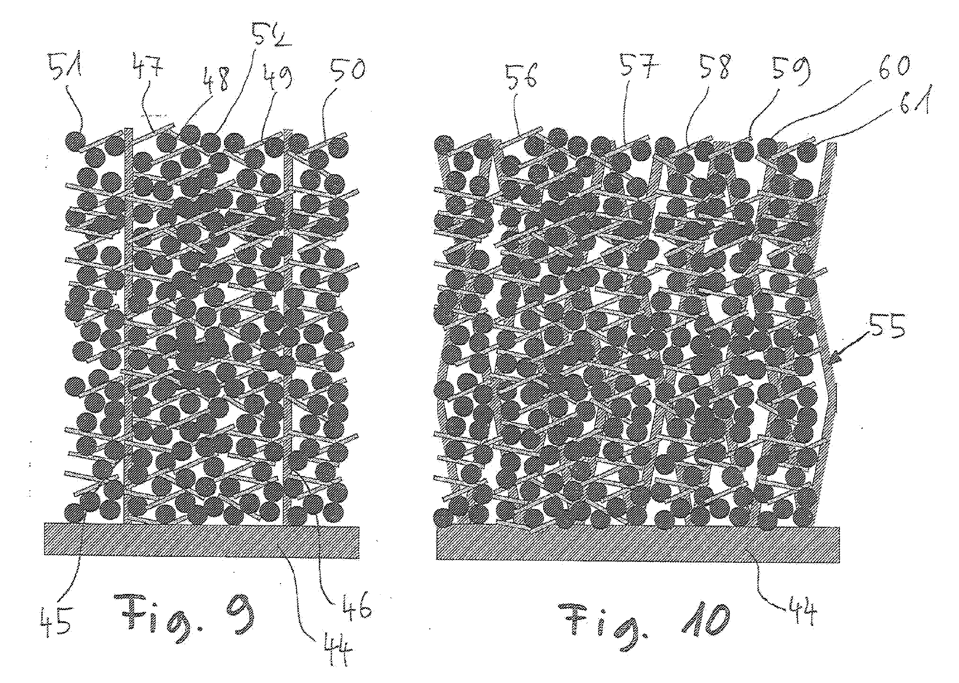

In den Figuren 9 und 10 ist eine Sorptionswärmeübertragungswand gemäß einem weiteren Ausführungsbeispiel in verschiedenen Ansichten dargestellt. Von einer Fluidwand 44 erstrecken sich Gitterstege 45, 46 senkrecht nach oben. Die Gitterstege 45, 46 bilden eine Makro-Tragstruktur, an der eine Vielzahl von Fasern 47 bis 50 angebracht sind. Die Fasern 47 bis 50 bilden eine wärmeleitende Meso-Tragstruktur, die wiederum mit einer gebundenen Schüttung aus einer Vielzahl von Kugeln 51, 52 aus Sorptionsmittel verbunden sind.

In Figur 10 sieht man, dass die Stege (45, 46 in Figur 9) zu einem Streckgitter 55 gehören. Mit dem Streckgitter 55 sind weitere Fasern 56 bis 59 verbunden. Die weiteren Fasern 56 bis 59 wiederum dienen zur Verbindung mit weiteren Grafitkugeln 60, 61.

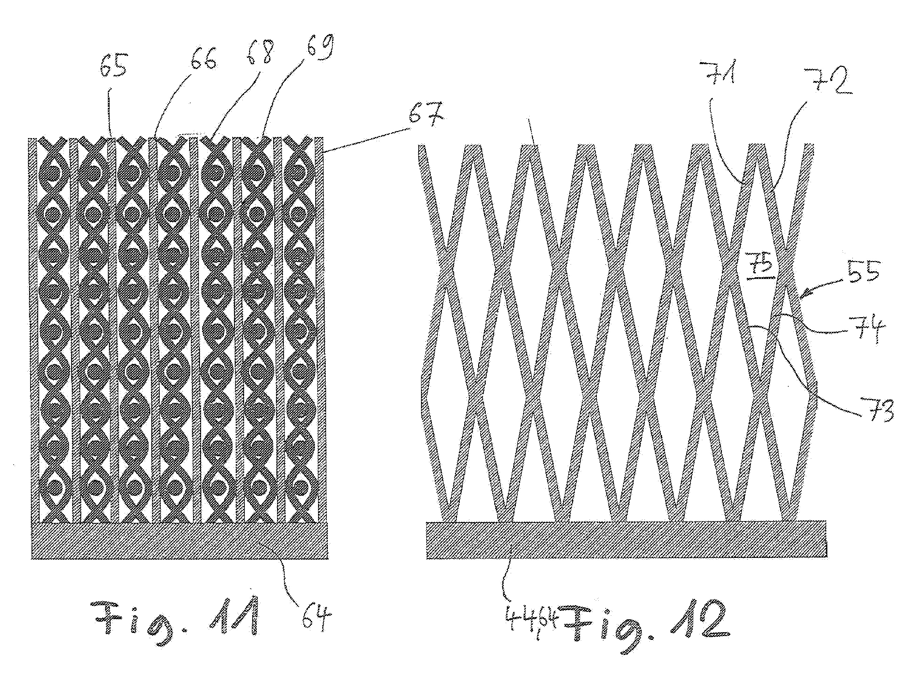

In Figur 11 ist eine Wärmeübertragerwand gemäß einem weiteren Ausführungsbeispiel im Schnitt dargestellt. Von einer Fluidwand 64 erstrecken sich eine Vielzahl von Wärmeleitstegen 65, 66 einer wärmeleitenden Tragstruktur. Zwischen den Wärmeleitstegen 65, 66 sind Gewebe 68, 69 aus Aktivkohlefasern angeordnet.

Die Figur 12 zeigt, dass es sich bei den Wärmeleitstegen (65, 66 in Figur 11) um ein Wärmeleitgitter 55 handelt, wie es in Figur 10 gezeigt ist. Bei dem Streckgitter 55 bilden jeweils vier Stege 71 bis 74 eine Raute 75. Die Adsorberstruktur wird also in diesem Falle durch einen alternierenden Stapel von Wärmeleitgittern und Aktivkohlefasergewebe gebildet, der stirnseitig wärmeleitend mit der Wand des Sorptions-Wärmeübertragers verbunden ist.

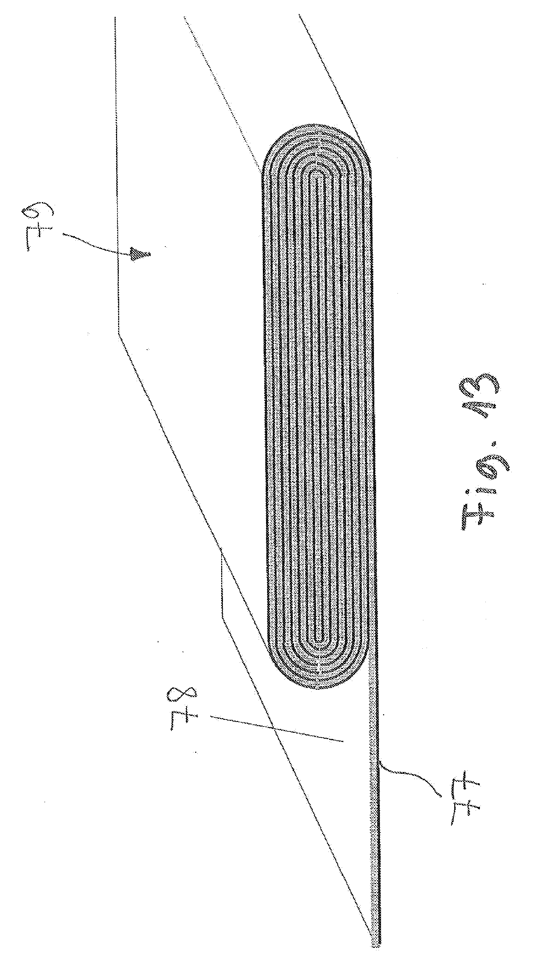

In Figur 13 ist angedeutet, dass es auch möglich ist, Metallstreckgitter 67 mit einer flächig aufgebrachten Adsorberstruktur, zum Beispiel in Form eines Gewebes aus aktivierten Kohlefasern, auf einen Ballen 79 aufzuwickeln. Ein derartiger Ballen 79 kann dann stirnseitig mit einer Fluidwand verbunden werden.

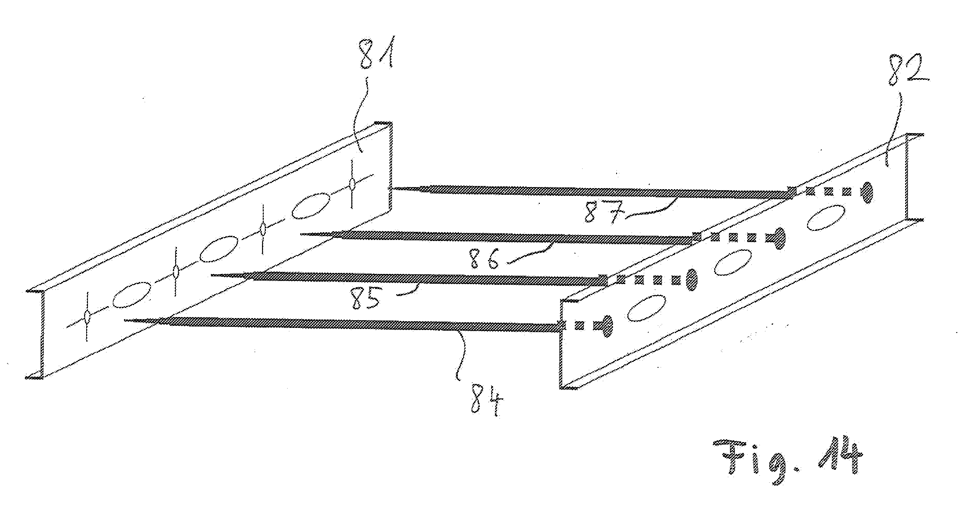

Die Herstellung von derartigen Sorptionsbetten erfolgt bevorzugt durch Aufeinanderschichten von Tragstrukturen und Aktivkohlefasergewebe. Die aufeinander geschichteten Stapel werden dann zur Erhöhung der Packungsdichte gepresst. Durch Wahl der Gewebedicke, Bindungsart, Gitterdicke, Zusammenpressung des Stapels können eine Vielzahl von Parametern auf ein Optimum eingestellt werden. Zur Erhöhung der möglichen Adsorberpackungsdichte und Verbesserung des Wärmekontaktes mit den Wärmeleitstrukturen können Hilfsmittel, zum Beispiel entsprechend Figur 14 vorgesehen sein, die den Stapel in der gewünschten Packungsdichte halten. Diese Hilfsmittel setzen sich wie gezeigt aus Endplatten und Zugankern zum Beispiel in Form verbindender dünner Stifte zusammen. Entsprechende Konstruktionen sind bekannt. Zur Wärmeleitenden Verbindung mit der Fluidwand kommen Klebe-, Löt- und Schweißverfahren in Frage. Bevorzugte Verfahren sind Widerstandslöten oder -schweißen mittels Kondensator-Entladung.

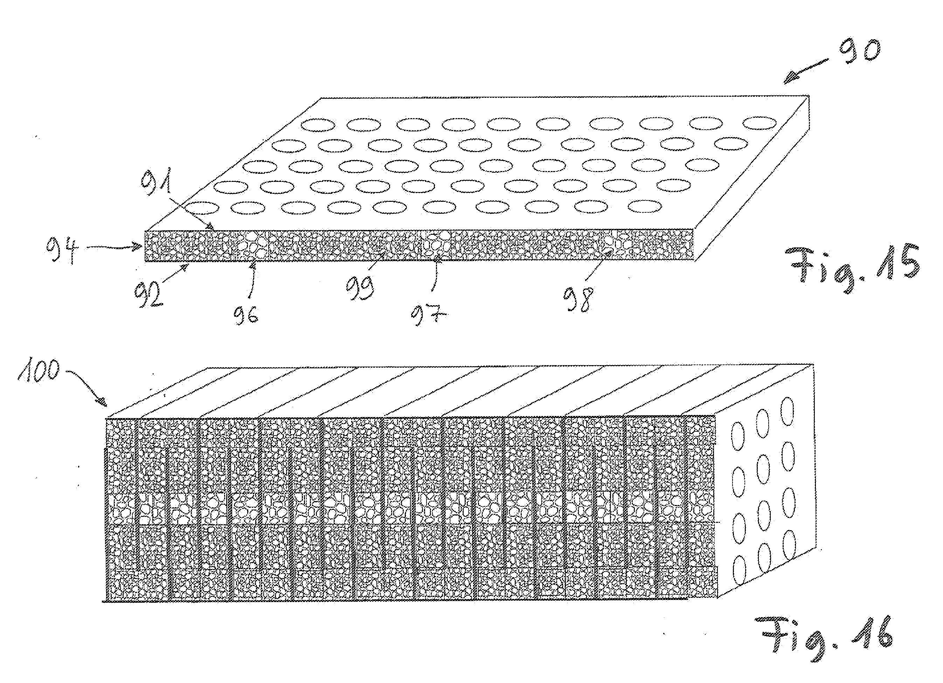

In Figur 15 ist der Aufbau einer Sandwichstruktur dargestellt, mit zwei gut wärmeleitenden Deckschichten in Form von Metallfolien und dazwischen angeordneter Adsorbensschicht. Die Adsorbensschicht kann dabei Bereiche mit erhöhter Dampfdurchlässigkeit aufweisen. Bei der Verwendung von Aktivkohlegewebe kann dies zum Beispiel durch entsprechende Anpassung der Bindungsart bewirkt werden.

Aus der Figur 16 ist zu entnehmen, wie aus der Sandwichstruktur durch Plissierung eine gefaltete Adsorberstruktur gebildet wird. Die Bereiche mit erhöhter Porosität zur Verbessereung des Stofftransportes sind dabei so beabstandet, dass in jeder Falte ein entsprechender Strömungskanal mit verringerten Transportverlusten gebildet wird.

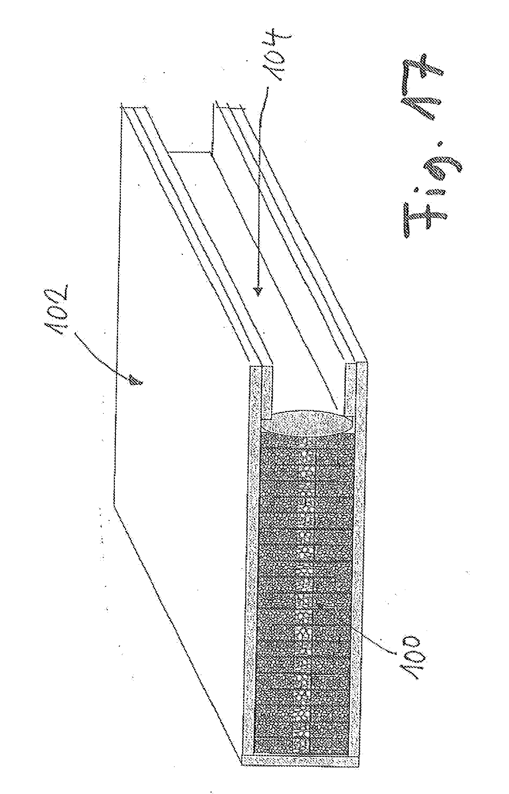

Die Figur 17 zeigt ein Beispiel, wie diese gefaltete Adsorberstruktur zum Beispiel innerhalb eines Sorptionsrohres noch verdichtet werden kann, um eine höhere Packungsdichte von Adsorbensmaterial zu erreichen. Dabei ist eine Art Kolbenleiste vorgesehen, mit der ein gewisser Druck auf die Adsorberstruktur ausgeübt werden kann. Diese Leiste kann dann durch Kleben, Löten, Schweißen oder andere Verbindungstechniken fixiert werden. Durch die Bereiche erhöhter Dampfdurchlässigkeit kann auf zusätzliche Strömungskanäle verzichtet werden, sodass der gesamte Querschnitt des Sorptionsrohres mit der Struktur ausgefüllt werden kann.

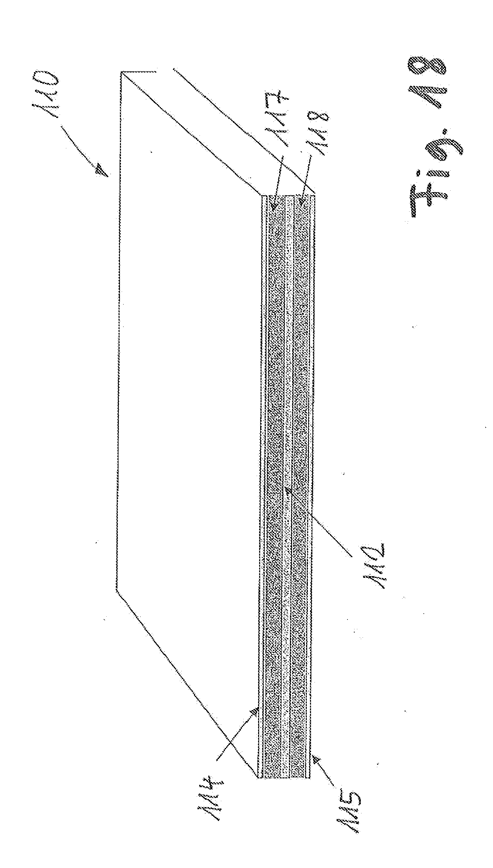

In Figur 18 ist eine 5-schichtige Sandwichstruktur dargestellt, die eine Zwischenschicht umfasst, die den axialen Dampftransport nochmals verbessert. Die zwischen den Wärmeleitfolien liegende Adsorbensmasse wird in diesem Falle durch 3 Schichten gebildet, von denen die beiden äußeren z. B. aus einem sehr dichten Aktivkohlegewebe mit hoher Aufnahmekapazität gebildet sein können und die Mittelschicht aus einem axial sehr durchlässigen Gewebe, das im Wesentlichen den Stofftransport in die Tiefe der daraus gebildeten plissierten Struktur hinein bewirkt.

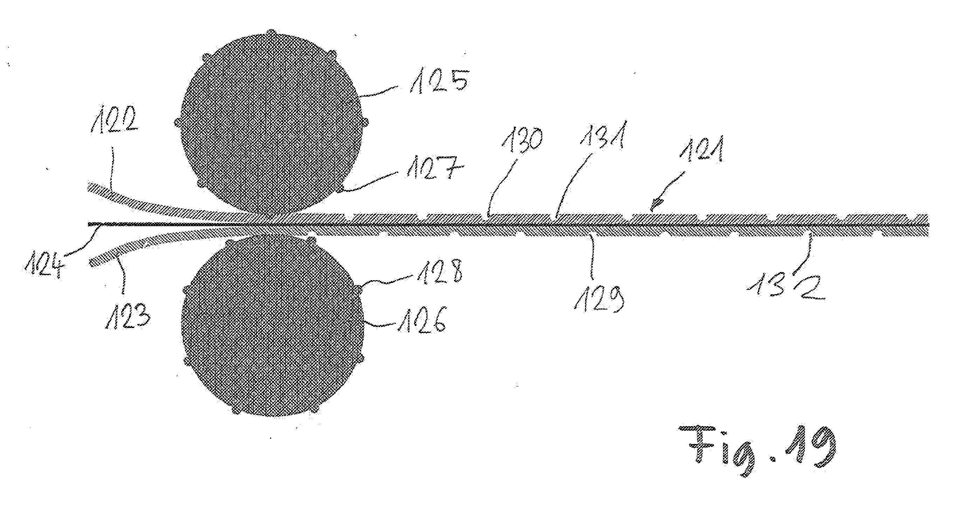

In Figur 19 ist ein alternativer Aufbau und eine zugehörige mögliche Fertigungsmethode eines laminierten Bandes 121 dargestellt, aus dem eine besonders bevorzugte Adsorberstruktur mit relativ einfachen Mitteln hergestellt werden kann. Das Laminat-Band 121 wird durch Auflaminierung zweier vorzugsweise extrudierter pastöser Adsorberschichten 122, 123 auf eine gut wärmeleitende flächige Metallstruktur 124 hergestellt. Die teigigen Adsorbermassen bestehen dabei aus einer geeigneten Mischung von Adsorberpartikeln und Binder. Optional können noch wärmeleitende Partikel zur Bildung einer wärmeleitenden Meso-Struktur, sowie ggf. weitere nicht näher spezifizierte Zusatzstoffe enthalten sein. In nicht näher dargestellter Weise kann das mittlere Metallband Durchbrüche und/oder Tulpungen aufweisen, über die die beiden pastösen Adsorbermasssen sich beim Laminierprozess miteinander und mit der flächigen Metall-Trägerstruktur verbinden können. Dadurch wird die gegenseitige Haftung der drei Schichten aufeinander verbessert. Alternativ kann auch die Metallfolie zur Verbesserung der Haftung vorher noch chemisch oder mechanisch behandelt, zum Beispiel aufgerauht sein.

Die extrudierten Adsorberschichten 122, 123 haben jeweils eine Dicke von circa 1 mm. Die Metallstruktur 124 wird vorzugsweise von einer Kupferfolie gebildet, die eine Dicke 0,05 mm aufweist. Die Kupferfolie ist verzinnt und optional gelocht. Der Laminiervorgang erfolgt zum Beispiel mit Hilfe von zwei Laminierwalzen 125, 126.

Vorzugsweise weisen die Laminierwalzen 125, 126 an der Oberfläche quer zur Walzrichtung ausgerichtete Verdrängerstege 127, 128 auf, die in die noch weichen Sorbensschichten Querrillen oder Nuten 129 bis 132 eindrücken. Ein Teil der Nuten 129, 120, 131, 132 kann als Sollbiegestellen für den nachfolgenden Plissierprozess dienen.

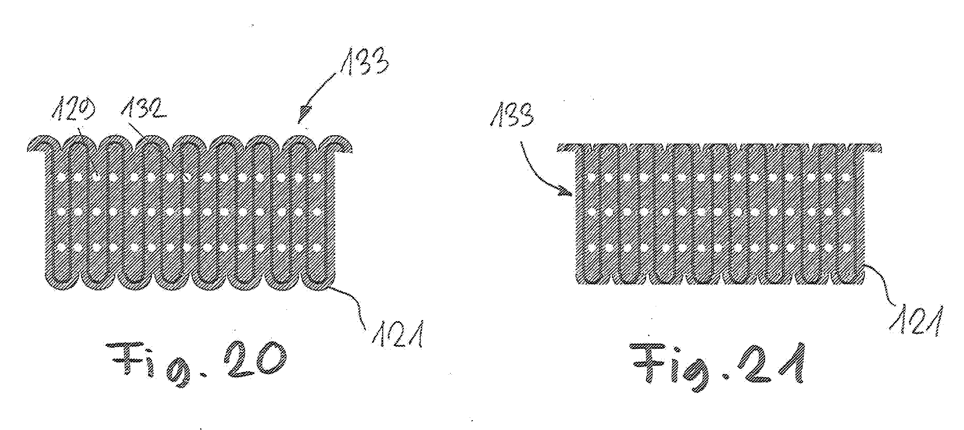

Die Figuren 20 und 21 zeigen Seitenansichten einer mit dem Laminatband 121 hergestellten Adsorbensstruktur. Im ersten Schritt wird durch Plissieren des Bandes 121 eine mäanderförmige Kompaktstruktur 133 hergestellt. Wie die Darstellung der Figur 20 andeutet, führen die durch Verdrängung eingearbeiteten Quernuten 129, 132 in der kompaktierten Struktur zu Dampfkanälen, die als Makro- oder Mesostruktur für den Stofftransport fungieren. In hier nicht erkennbarer Weise kann diese Struktur auch bronchiale Verzweigungen aufweisen, um den Stofftransport möglichst druckverlustarm zu gestalten.

Im direkt nachfolgenden Schritt werden, wie in Figur 21 gezeigt ist, die Kuppen der Mäander beidseitig zum Beispiel durch Rakeln von der Sorbensschicht befreit. In diesem Zustand entsprechend Figur 21 können die kompaktierten Adsorberstrukturen 133 endgültig abgelängt und ausgehärtet werden.

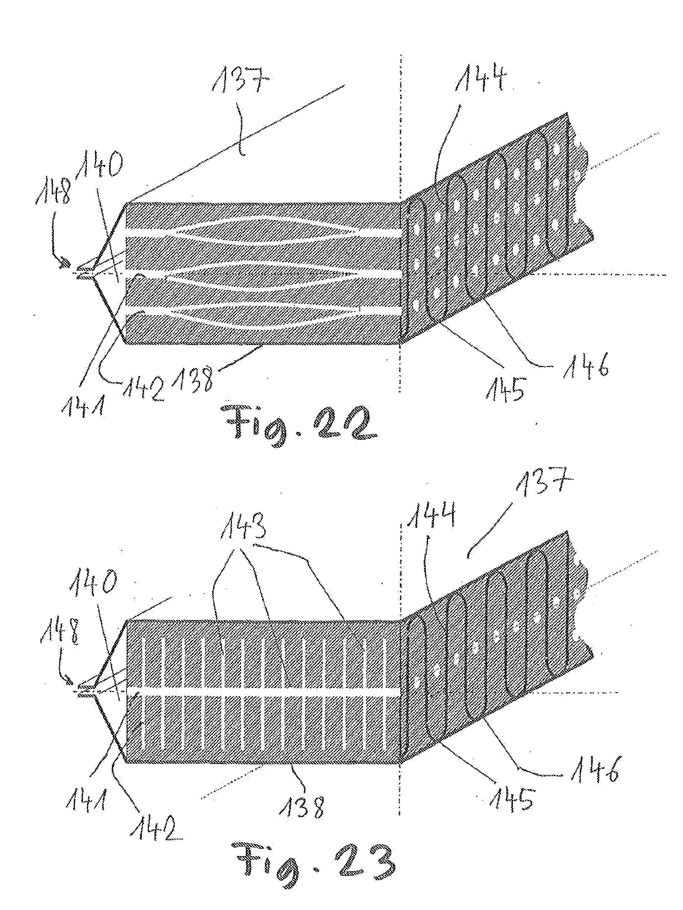

In den Figuren 22 und 23 sind geschnittene Teilansichten eines Sorptions- oder Reaktionsrohres 136 dargestellt, das mit der entsprechend gefertigten Adsorberstruktur zwischen Fluidwänden 137, 138 ausgestattet ist. Die Figuren 22 und 23 zeigen zwei beispielhafte Verläufe verzweigter Meso-Kanalstrukturen mit einem Hauptkanal 140 und Nebenkanälen 141, 142, 143 für den Stofftransport. Durch die abwechselnde Lage von Ebenen für die Kanalstrukturen und die ebenfalls ins Adsorbensmaterial eingebetteten metallischen Makro-Wärmeleitschichten sind die verlustbehafteten Transportwege für den Wärme- und den Stoffstrom kurz und können durch Anpassung einfach variierbarer konstruktiver Parameter leicht optimiert werden. Für die wärmeleitende bei 145 und 146 angedeutete Anbindung der Metallfolien 144 an die Fluidwände 137, 138 kommen neben dem Kleben auch vorzuziehende Löt- oder Schweißverfahren in Frage. Ein besonders bevorzugtes Verfahren ist ein hier nicht näher spezifiziertes flussmittelarmes Lötverfahren, bei dem eine auf der Innenseite der Fluidwand 137, 138 und/oder auf der metallischen Trägerschicht 144 aufgebrachte niedrig schmelzende Lotschicht aufgeschmolzen und mit dem Lotpartner stoffschlüssig verbunden wird. Bei 148 ist der Zustand vor dem Dichtschweißen, insbesondere Laserschweißen, angedeutet.

Es sei nochmals darauf hingewiesen, dass die flächigen strukturbildenden Adsorbensschichten aus beliebigen Mischungen von Adsorbensmaterial und Zusatzmaterialien gebildet sein können.

## Patentansprüche

1. Sorptionswärmeübertragerwand mit einer von einem Wärme abgebendem oder aufnehmendem Fluid beaufschlagten Fluidseite (2), die durch eine Fluidwand (4;44;64) begrenzt ist, und einer Sorptionsseite (5), die ein Sorptionsbett (6) mit einem Sorptionsmittel (7) aufweist, das unter Aufnahme beziehungsweise Abgabe von Wärme ein Sorptiv anlagert, **dadurch gekennzeichnet, dass** das Sorptionsbett (6) eine gut wärmeleitende Tragstruktur (10,21) für das Sorptionsmittel (7) umfasst, die wärmeleitend mit der Fluidwand (4;44;64) verbunden ist.

2. Sorptionswärmeübertragerwand nach einem der vorhergehenden Ansprüche, **dadurch gekennzeichnet, dass** das Sorptionsbett eine Sorptionsmittelstruktur (15) aufweist.

3. Sorptionswärmeübertragerwand nach einem der vorhergehenden Ansprüche, **dadurch gekennzeichnet, dass** das Sorptionsbett durch eine plissierte Sandwichstruktur gebildet wird.

4. Sorptionswärmeübertragerwand nach Anspruch 3, **dadurch gekennzeichnet, dass** die Sandwichstruktur aus zwei wärmeleitenden Deckschichten und mindestens einer dazwischenliegenden Sorptionsmittelstruktur besteht.

5. Sorptionswärmeübertragerwand nach Anspruch 4, **dadurch gekennzeichnet, das** die wärmeleitenden Deckschichten Durchbrüche aufweisen und im plissierten Zustand wärmeleitende Tragstrukturen bilden.

6. Sorptionswärmeübertragerwand nach einem der Ansprüche 2 bis 5, **dadurch gekennzeichnet, dass** die Sorptionsmittelstruktur Bereiche mit verbessertem Dampftransport umfasst.

7. Sorptionswärmeübertragerwand nach einem der vorhergehenden Ansprüche, **dadurch gekennzeichnet, dass** die Sorptionsmittelstruktur eine wärmeleitende Meso-Struktur (47-50,56-59) umfasst.

8. Sorptionswärmeübertragerwand nach Anspruch 7, **dadurch gekennzeichnet, dass** die wärmeleitende Meso-Struktur (47-50,56-59) Kohlenstoff enthält.

9. Sorptionswärmeübertragerwand nach Anspruch 7 oder 8, **dadurch gekennzeichnet, dass** die wärmeleitende Meso-Struktur (47-50;56-59) Kohlenstoffpartikel, Kohlenstoffplättchen und/oder Kohlenstoff-Fasern enthält.

10. Sorptionswärmeübertragerwand nach einem der Ansprüche 7 bis 9, **dadurch gekennzeichnet, dass** die wärmeleitende Meso-Struktur (47-50,56-59) Ruß- und/oder Grafitpartikel und/oder -plättchen enthält.

11. Sorptionswärmeübertragerwand nach einem der Ansprüche 7 bis 10, **dadurch gekennzeichnet, dass** die wärmeleitende Meso-Struktur (47-50,56-59) aktivierte Kohlefasern (AKF) enthält.

12. Sorptionswärmeübertragerwand nach einem der Ansprüche 7 bis 11, **dadurch gekennzeichnet, dass** die wärmeleitende Meso-Struktur (47-50,56-59) sogenannte multiwalled Carbon Nanotubes enthält.

13. Sorptionswärmeübertragerwand nach einem der Ansprüche 7 bis 12, **dadurch gekennzeichnet, dass** die wärmeleitende Meso-Struktur (47-50,56-59) Metallfasern oder -partikel enthält.

14. Sorptionswärmeübertragerwand nach einem der Ansprüche 7 bis 13, **dadurch gekennzeichnet, dass** die wärmeleitende Meso-Struktur granulierte Aktivkohle (51,52,60,61) und/oder wärmeleitende Keramikpartikel enthält.

15. Sorptionswärmeübertragerwand nach einem der Ansprüche 7 bis 14, **dadurch gekennzeichnet, dass** die Sorptionsmittelstruktur (15) ein Netz von Strömungskanälen (17-20;33-35,39,40) umfasst.
